# EUROPEAN PATENT APPLICATION

(11) **EP 0 878 271 A2**
(43) Date of publication of application: **18.11.1998**
(21) Application number: 98850069.0
(22) Date of filing: 04.05.1998
(51) Int. Cl.: B25B 27/06, F16C 35/063

(54) **A hydraulic nut**

(30) Priority: 14.05.1997 SE 9701779
(71) Applicant: Aktiebolaget SKF, S-415 50 Göteborg (SE)
(72) Inventor: Manne, Nils, 418 72 Göteborg (SE); Johansson, Per-Olof, 444 65 Jörlanda (SE)
(74) Representative: Westman, P. Börje I.

(57) **Abstract**

A hydraulic nut (14) for mounting a ring on a shaft (12), and comprising a sleeve (15) with an annular groove (16) in one end face, an annular piston (17) in the groove (16), said piston projecting from said groove with an end portion (18) facing the ring member, a pressure fluid conduit connectable to said pressure chamber for introduction of pressure fluid into the groove, thereby urging the piston (17) outwards for giving the ring member axial mounting force, the hydraulic nut (14) being arranged between a first member (22) fixedly attached to the shaft (12) and a second member (23) engaging the side face of the ring member, the sleeve member (15) of the hydraulic nut (14) being loosely arranged around the shaft (12) and having bearing arrangements (24, 25) provided between the first member (22) and sleeve (15) and between the second member (23) and the end (18) of piston (17).

## Description

The present invention refers to hydraulic nuts of the type intended for mounting and dismounting ring members on shafts, primarily medium and large sized bearings. Conventionally such hydraulic nuts comprise an internally threaded sleeve member with a circular groove in one end face, and an annular piston which is inserted in the circular groove in the sleeve. Between the groove and the piston are provided O-ring seals for leak-proof sealing off of a pressure chamber formed between the bottom of said circular groove and the piston. At mounting such a hydraulic nut is screwed up on the threaded end of the shaft with the piston fully retracted into the circular groove whereby the end of the piston projects out from the circular groove thereby abuting the ring member to be mounted on the shaft. The sleeve member provided with the circular groove has a threaded hole communicating with the pressure chamber and intended for receiving a nipple of a pressure fluid lead. When pressure fluid is introduced from a pressure source through the lead, the piston is ejected axially from the pressure chamber and the force exerted by the piston is sufficient for mounting the ring member on the shaft. In case the ring member is a rolling bearing it is, in some cases, appropriate that the shaft and ring member are rotated relative to each other during the mounting operation in order to secure that an even bearing clearance reduction is obtained in the bearing.

When mounting such a ring member, which should preferably be rotated during mounting, on a non-rotating shaft, e.g. a wheel bearing on a wheel axle, there are no problems, but in applications where the shaft is rotating, e. g. a rotatable shaft in a housing or the like, it would not be possible to rotate the shaft with an arrangement of this type as the conduit from the pressure fluid source to the nipple, inevitably will wind itself around the shaft, thereby preventing rotation thereof.

The purpose of the present invention is to propose a hydraulic nut of the type described which allows the mutual rotation of the ring member and the shaft required for a correct mounting, also when the shaft is rotatable in a fixed housing, and this is achieved with the features defined in the appended claim 1.

The invention will be further described with reference to the accompanying drawings showing in
- Fig. 1: a hydraulic nut according to the prior art applied for driving up a spherical roller bearing on a taper shaft, and
- Fig. 2: a hydraulic nut according to the invention applied to a shaft end.

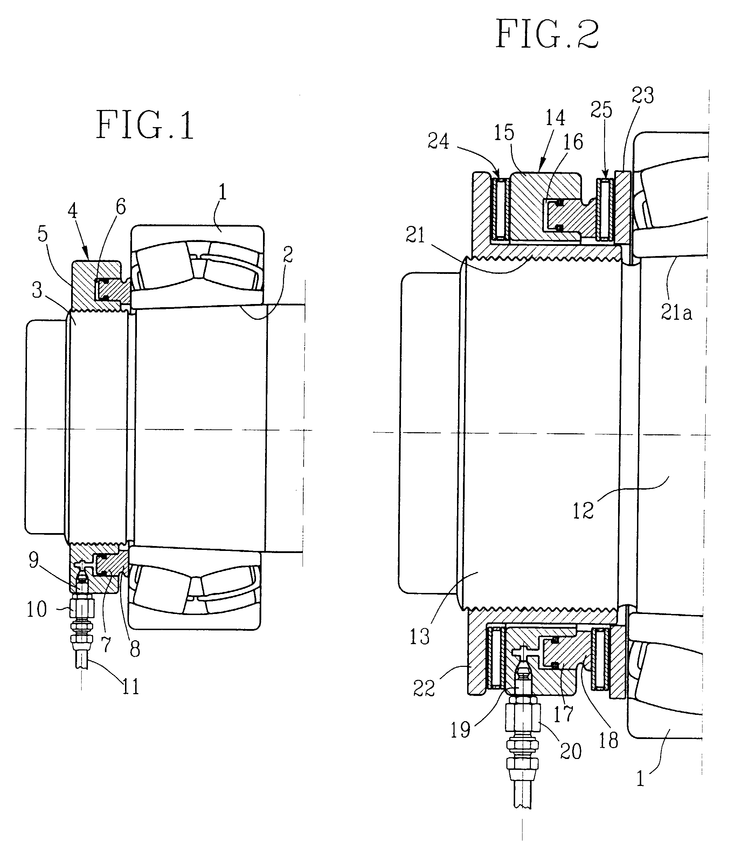

In Fig. 1 is schematically shown a double row spherical roller bearing 1 having a taper bore and being arranged on a taper shaft 2. Projecting from the taper portion of the shaft is a cylindrical, threaded shaft end portion 3. A hydraulic nut 4 having a threaded bore and of earlier known, conventional design has been screwed up on the threaded shaft end portion 3. This prior art hydraulic nut 4 consists of two basic elements, i.e. a steel sleeve 5, which is internally threaded for attachment to the threaded shaft end portion 3 and having in one side surface an annular groove 6, and an annular piston 7, which is received in the groove 6 and projecting with its outer end 8 outside the side face of the sleeve 5. The steel sleeve 5 is provided with at least one threaded bore 9, extending from an external surface of the sleeve and opening in a pressure chamber formed by the groove 6 and the piston 7. At use of the hydraulic nut for mounting purposes, a nipple 10 connected via a conduit 11 to a not shown pressure fluid source, is screwed into the threaded bore 9 in the steel sleeve, whereupon pressurized fluid is introduced in the pressure chamber to allow this to be subjected to a pressure urging the piston to move further out from the groove. In some case, e.g. at taper roller bearings, it is important that the bearing is rotated relative to the shaft 2 during its mounting on the shaft. This is easily accomplished when the outer race ring of the bearing is rotatable, i.e. when supporting a wheel or the like. However, when the shaft is arranged in a rotary manner, and the outer race ring of the bearing consequently is non-rotatable, the conduit 11 between the pressure fluid source and the nipple 10, of course will prevent rotation of the shaft during mounting, as the rather stiff, armoured hose forming the conduit, can not be wound about the shaft 2 at rotation thereof. Therefore the utility of this prior art hydraulic nut is limited.

Fig. 2 shows in a partly sectional view the novel hydraulic nut in accordance with the present invention. For the sake of simplicity the arrangement is shown with only a portion of a bearing 1 arranged on a taper shaft 12 with a cylindrical, threaded shaft end portion 13. The hydraulic nut 14 comprises a steel sleeve 15 having in one side surface an annular groove 16, and an annular piston 17, which is received in the groove 16 and projects with its outer end 18 outside the side face of the sleeve 15. The steel sleeve 15 is provided with at least one threaded bore 19, extending from an external surface of the sleeve and opening in a pressure chamber formed by the groove 16 and the piston 17. At use of the hydraulic nut for mounting purposes, a nipple 20 is connected via a conduit 21 to a not shown pressure fluid source. So far the novel hydraulic nut 14 corresponds to the prior art hydraulic nut 4, with the exception that the steel sleeve 15 is not threaded internally. The novel hydraulic nut 14 further incorporates an internally threaded bushing 21 having at one end a radially outwardly extending flange 22. Further there is a radial washer 23 having a larger hole diameter than the shaft end diameter, and which at mounting of the hydraulic nut is first positioned against the ring of the bearing or the like (not shown) that shall be driven up on the taper shaft portion 12. Thereupon the threaded bushing 21 with the steel sleeve 15 and the piston 16 positioned thereover is screwed up on the threaded shaft end 12 with the end 18 of the piston facing the radial washer 23. The outwardly extending flange 22 of the bushing 21 is positioned on the opposite side of the steel sleeve 15 as seen from the washer 23, whereby the sleeve 15 and its piston 16 are positioned between the flange 22, which via the threaded bushing 21 is firmly connected to the shaft end 13 of the rotatable shaft 12, and the washer 23, which is contacting the bearing ring 21a or the like to be mounted on the taper shaft 12. For allowing rotation of the shaft 12 during mounting of the bearing ring or the like without problems caused by the conduit attached to the nipple 20, there are provided bearing arrangements between the radial surfaces of the sleeve 15 and the bushing flange 22 on one hand and between the washer 23 and the projecting end 18 of the piston 17 on the other hand.

In the embodiment shown these bearing arrangements have been illustrated as axial needle roller bearings 24 and 25 respectively, which are suitable, e.g. due to the low structural height of such bearings, but it is of course also possible to use other types of bearings. So it is possible also to provide at least one of said cooperating surfaces with a lining of a low friction material, preferably based on polytetrafluoro ethylene (PTFE). Such a low friction lining can be made e.g. from GLYCODUR®, a dry sliding bearing material.

With such bearing arrangements provided between the hydraulic nut 14 and its cooperating surfaces 22 and 23, the hydraulic nut can be maintained non-rotatable although the shaft end over which it is arranged rotates, thereby permitting rotation of the shaft during the mounting of a ring on the shaft 12.

The steel sleeve 15 has preferably a bigger internal diameter than the outer diameter of the bushing over which it is arranged, such as shown. During the mounting operation there are only small forces acting in radial direction and the sleeve 15 therefore need no support in radial direction but can be arranged in a "free-floating" manner over the bushing 21. If desired it is of course also possible to make the inner diameter of the sleeve only some millimeter bigger than the outer diameter of the bushing, and to provide a sliding bearing, e.g. in form of a GLYCODUR® lining therebetween.

The invention is not limited by the embodiment shown in and described in connection to Fig. 2 of the drawings, but modifications and variations are possible within the scope of the accompanying claims. Although the arrangement has been shown at a taper shaft and with a spherical roller bearing having a taper bore, it is evident that the same effect can be obtained when mounting any ring on a taper or a cylindrical shaft, and in case e.g. a taper roller bearing is to be mounted it is especially important that the race rings are rotated relative to each other during the mounting.

## Claims

1. A hydraulic nut (14) of the type intended for mounting and dismounting a ring member with on a shaft (12), which during mounting can be rotated relative to the shaft (12), and which nut comprises a sleeve member (15) with an annular groove (16) in one end face, an annular piston (17), inserted in the annular groove (16), for forming a pressure chamber between groove and piston, said piston projecting from said pressure chamber with an end portion (18) facing the ring member to be mounted, a pressure fluid conduit connectable to said pressure chamber, for introduction of pressure fluid from a source into the pressure chamber, thereby urging the annular piston (17) outwards for causing an axial mounting force on the ring member,
**characterized therein,**
that the hydraulic nut (14) is arranged between a first member (22) being fixedly attached to the shaft (12) and a second member (23) engaging the side face of the ring member to be mounted, whereby the sleeve member (15) of the hydraulic nut (14) is loosely arranged around the shaft (12) and with bearing arrangements (24, 25) provided between the said first member (22) and the sleeve member (15) and between the second member (23) and the end (18) of the piston (17).

2. A hydraulic nut as claimed in claim 1,
**characterized therein,**
that said first member (22) is a flange projecting radially from a bushing (21) provided with means for attachment to an end portion (13) of the shaft (12).

3. A hydraulic nut as claimed in claim 2,
**characterized therein,**
that the means for attachment of said bushing (21) to the shaft are cooperating threads.

4. A hydraulic nut as claimed in claim 2 or 3,
**characterized therein,**
that the annular steel sleeve (15) is arranged with a clearance around the external envelope surface of said bushing (21).

5. A hydraulic nut as claimed in claim 1,
**characterized therein,**
that said second member (23) is a washer arranged around the shaft (12) and positioned between the outer end of the projecting portion (18) of the piston (17) and a ring member to be mounted on the taper shaft.

6. A hydraulic nut as claimed in anyone of the proceeding claims,
**characterized therein,**
that the bearing arrangements (24, 25) provided between the said first member (22) and the sleeve member (15) and/or between the second member (23) and the end (18) of the piston (17), are thrust rolling bearings, preferably axial needle roller bearings.

7. A hydraulic nut as claimed in anyone of claims 1-5,
**characterized therein,**
that at least one of the bearing arrangements provided between the said first member (22) and the sleeve member (15) and/or between the second member (23) and the end (18) of the piston (17), is a sliding bearing.

8. A hydraulic nut as claimed in claim 7,
**characterized therein,**
that the sliding bearing is constituted by a low-friction lining, preferably based on polytetrafluoro ethylene (PTFE).
